# EUROPÄISCHE PATENTANMELDUNG

(11) **EP 4 529 753 A1**
(43) Veröffentlichungstag der Anmeldung: **02.04.2025**
(21) Anmeldenummer: 24200494.3
(22) Anmeldetag: 16.09.2024
(51) Int. Cl.: A01B 63/32, A01C 7/20

(54) **LANDWIRTSCHAFTLICHE ARBEITSMASCHINE UND VERFAHREN ZUR EINSTELLUNG EINES DEFINIERTEN BETRIEBSZUSTANDS EINES ARBEITSWERKZEUGS EINER LANDWIRTSCHAFTLICHEN ARBEITSMASCHINE**

(30) Priorität: 28.09.2023 DE 102023126459
(71) Anmelder: Horsch Maschinen GmbH, 92421 Schwandorf (DE)
(72) Erfinder: HASELHOFF, Alexander, 92421 Schwandorf (DE); KELLER, Lukas, 92421 Schwandorf (DE)
(74) Vertreter: v. Bezold & Partner Patentanwälte - PartG mbB

(57) **Zusammenfassung**

Die Erfindung betrifft ein Verfahren zur Einstellung eines definierten Betriebszustands, vorzugsweise einer definierten Lage, eines Arbeitswerkzeugs (200) einer landwirtschaftlichen Arbeitsmaschine (1) zur Bearbeitung eines Bodens (B) und/oder zur Einbringung eines landwirtschaftlichen Guts in den Boden (B), wobei das Arbeitswerkzeug (200) mittels einer Verstelleinrichtung (310, 320) an einen Maschinenrahmen (100) der Arbeitsmaschine (1) verstellbar gekoppelt ist. Das Verfahren umfasst das Erfassen eines kinematischen Betätigungszustands der Verstelleinrichtung (310, 320), welcher in einem Betriebszustand der Arbeitsmaschine (1) einer ersten Lage des Arbeitswerkzeugs (200) in Bezug auf den Boden (B) zugeordnet ist; das Betätigen, vorzugsweise Steuern und/oder Regeln, der Verstelleinrichtung (310, 320) in Abhängigkeit des erfassten Betätigungszustands bis ein definierter Betätigungszustand der Verstelleinrichtung (310, 320) erreicht wird; und das Einstellen des definierten Betriebszustands des Arbeitswerkzeugs (200) in Abhängigkeit des Betätigens der Verstelleinrichtung (310, 320). Die Erfindung betrifft ferner eine landwirtschaftliche Arbeitsmaschine (1).

## Beschreibung

Die vorliegende Erfindung liegt auf dem Gebiet der Landtechnik und betrifft eine landwirtschaftliche Arbeitsmaschine zur Bearbeitung eines Bodens und/oder zur Einbringung eines landwirtschaftlichen Guts in einen Boden. Die vorliegende Erfindung betrifft ferner ein Verfahren zur Einstellung eines definierten Betriebszustands, vorzugsweise einer definierten Lage, zumindest eines Arbeitswerkzeugs einer landwirtschaftlichen Arbeitsmaschine.

Im Bereich der Landwirtschaft kommen mobile landwirtschaftliche Arbeitsmaschinen zur Bearbeitung eines Bodens und/oder zur Einbringung eines landwirtschaftlichen Guts in einen Boden zum Einsatz. Die mobilen landwirtschaftlichen Arbeitsmaschinen sind beispielsweise ziehbare und/oder anhängbare landwirtschaftliche Arbeitsmaschinen ohne eigenes Antriebsaggregat, welche von einer separaten Zugmaschine, beispielsweise in Form eines Ackerschleppers, in Bewegung versetzt werden. Ebenso sind auch selbstfahrende landwirtschaftliche Arbeitsmaschinen bekannt, welche über ein eigenes Antriebsaggregat verfügen.

Zur Bearbeitung des Bodens, beispielsweise in Form eines Ackerbodens, umfasst eine landwirtschaftliche Arbeitsmaschine ein oder mehrere Arbeitswerkzeuge. Beispielsweise kommen zur Gewährleistung einer definierten Arbeitstiefe und/oder einer definierten Führung entlang einer Fläche des Bodens verschiedene Verfahren sowie verschiedene Einrichtungen, Einheiten und Elemente eines Arbeitswerkzeugs zum Einsatz. Eine Herausforderung ist beispielsweise die Anpassung des Arbeitswerkzeugs an sich verändernde Eigenschaften des Bodens, und zwar während eines Betriebszustands der landwirtschaftlichen Arbeitsmaschine.

Aus dem Stand der Technik sind beispielsweise Einrichtungen zur Einstellung eines Schardrucks bekannt, um in Abhängigkeit einer Zusammensetzung oder einer Eigenschaft des Bodens (beispielsweise steinig, sandig, lehmig, etc.) ein landwirtschaftliches Gut stets in etwa der gleichen Arbeitstiefe abzulegen. Hierbei wird in der Regel ein Druck an oder auf Stützrädern der Arbeitsmaschine gemessen. In Abhängigkeit des gemessenen Drucks erfolgt sodann eine entsprechende Betätigung von Aktuatoren, welche wiederum die Lage des Arbeitswerkzeugs entsprechend ändern, sodass das Gewicht auf den Stützrädern stets nahezu unverändert ist. Ziel ist es, bei sich verändernden Eigenschaften des Bodens den Schardruck möglichst dauerhaft im Wesentlichen konstant zu halten.

Aus der Patentliteratur des Stands der Technik sind ebenfalls verschiedene Ansätze zur Einstellung von Arbeitswerkzeugen landwirtschaftlicher Arbeitsmaschinen bekannt, wobei auf die Druckschriften DE 10 2017 223 790 A1, DE 10 2021 113 231 , WO 2021/089197A1 A1 und US 8,275,525 B2 verwiesen wird. Die bekannten Einrichtungen, Anordnungen und Systeme dienen zur unmittelbaren oder mittelbaren Erfassung einer Lage des Arbeitswerkzeugs und vor allem einer auf das Arbeitswerkzeug wirkenden Kraft mittels Lagesensoren, Kraftsensoren und/oder Drucksensoren. In Abhängigkeit der ermittelten Lage und der ermittelten Kraft werden wiederum Aktuatoren, beispielsweise in Form von Hydraulikzylindern, betätigt, um letztendlich eine Lage des Arbeitswerkzeugs einzustellen. Im Fall der Verwendung eines Hydraulikzylinders beispielsweise werden in Bezug auf das Arbeitsmedium entsprechende Druck- und/oder Volumenströme eingestellt.

Ein Nachteil der bekannten Einrichtungen, Anordnungen und Systeme ist jedoch die Neigung zum Überschwingen (auch als "Aufschwingen" bezeichnet), sodass eine definierte Lage des Arbeitswerkzeugs, vor allem für eine definierte Zeitdauer, aufgrund von Verzögerungsverhalten der beteiligten Einrichtungen, Anordnungen und Systeme nicht hinreichend genau eingestellt werden kann.

Beispielsweise können Änderungen einer Kraft an einem Säschar über ein Hydrauliksystem auch unmittelbar Auswirkungen auf die Kraft eines zugeordneten Hydraulikzylinders haben, sodass eine hinreichend oder wünschenswert exakte Einstellung einer definierten Lage des Säschars nicht dauerhaft oder zumindest für eine definierte Zeitdauer gewährleistet werden kann. Demnach müssen jeweilige Steuerungs- und/oder Regelungssysteme vergleichsweise träge eingestellt werden, um hohe Reaktionszeiten zu erzielen und dadurch das Auftreten von unerwünschten Schwingungen zu verhindern oder zumindest zu reduzieren.

Darüber hinaus müssen bekannte Steuerungs- und/oder Regelungssysteme jeweils individuell auf das jeweilige Arbeitswerkzeug angepasst werden, was beispielsweise auch das Verhalten einer zugehörigen Lagerung des Arbeitswerkzeugs an einem Maschinenrahmen betrifft. Beispielsweise müssen für unterschiedliche Säschar-Typen jeweils eigene Steuerungs- und/oder Regelungssysteme entwickelt und angepasst werden

Es ist eine Aufgabe der vorliegenden Erfindung, ein Verfahren zur Einstellung eines definierten Betriebszustands, vorzugsweise einer definierten Lage, zumindest eines Arbeitswerkzeugs einer landwirtschaftlichen Arbeitsmaschine bereitzustellen, welches vor allem hinsichtlich Reaktionsverhalten, Adaptierbarkeit, und/oder Genauigkeit verbessert ist. Ferner ist es eine Aufgabe der vorliegenden Erfindung, eine landwirtschaftliche Arbeitsmaschine bereitzustellen, welche vorzugsweise zur Ausführung des Verfahrens konfiguriert ist.

Die Aufgabe wird durch die Merkmale der unabhängigen Ansprüche 1 und 12 gelöst. Weitere Ausführungsbeispiele und Anwendungen der vorliegenden Erfindung ergeben sich aus den abhängigen Ansprüchen und werden in der folgenden Beschreibung unter teilweiser Bezugnahme auf die Figuren näher erläutert.

Die vorliegende Erfindung betrifft nach einem ersten allgemeinen Gesichtspunkt ein Verfahren zur Einstellung, vorzugsweise Steuerung und/oder Regelung, eines definierten Betriebszustands, vorzugsweise einer definierten Lage, besonders bevorzugt einer definierten Arbeitstiefe in einem Boden, zumindest eines Arbeitswerkzeugs einer landwirtschaftlichen Arbeitsmaschine zur Bearbeitung eines Bodens und/oder zur Einbringung eines landwirtschaftlichen Guts in einen Boden, wobei das zumindest eine Arbeitswerkzeug mittels zumindest einer Verstelleinrichtung an einen Maschinenrahmen der Arbeitsmaschine verstellbar gekoppelt ist, umfassend: • Erfassen eines kinematischen Betätigungszustands der zumindest einen Verstelleinrichtung, welcher vorzugsweise in einem Betriebszustand der Arbeitsmaschine einer ersten Lage des zumindest einen Arbeitswerkzeugs in Bezug auf den Boden zugeordnet ist; • Betätigen, vorzugsweise Steuern und/oder Regeln, der zumindest einen Verstelleinrichtung in Abhängigkeit des erfassten kinematischen Betätigungszustands bis ein definierter kinematischer Betätigungszustand der zumindest einen Verstelleinrichtung erreicht wird; und • Einstellen des definierten Betriebszustands, vorzugsweise der definierten Lage, besonders bevorzugt der definierten Arbeitstiefe in dem Boden, des zumindest einen Arbeitswerkzeugs in Abhängigkeit des Betätigens oder durch das Betätigen und/oder im Wesentlichen während des Betätigens der zumindest einen Verstelleinrichtung.

Der definierte Betriebszustand des zumindest einen Arbeitswerkzeugs muss nicht unbedingt nur durch eine definierte Lage des zumindest einen Arbeitswerkzeugs gekennzeichnet sein und/oder eine definierte Lage des zumindest einen Arbeitswerkzeugs umfassen. Der definierte Betriebszustand des zumindest einen Arbeitswerkzeugs kann zumindest einen von folgenden umfassen und/oder als zumindest einer von folgenden gekennzeichnet sein: • eine definierte Form des zumindest einen Arbeitswerkzeugs oder zumindest eines Teils davon; • eine definierte Lage des zumindest einen Arbeitswerkzeugs oder zumindest eines Teils davon; und/oder • eine definierte Belastung an dem zumindest einen Arbeitswerkzeug oder an zumindest einem Teil davon, und/oder eine definierte Belastung des Bodens durch das zumindest eine Arbeitswerkzeug oder durch zumindest einen Teil davon.

Die definierte Form des zumindest einen Arbeitswerkzeugs, welches vorzugsweise mehrere Werkzeugeinrichtungen umfasst (beispielsweise ein Arbeitswerkzeug einer landwirtschaftlichen Sämaschine mit einer Vielzahl von Werkzeugeinrichtungen in Form von Schareinrichtungen, welches vorzugsweise als ein separat montiertes und/oder separat montierbares Werkzeug ausgebildet ist), kann eine dem Boden und/oder eine dem für die Aussaat vorgesehenen landwirtschaftlichen Gut angepasste Stellung einzelner Schareinrichtungen zueinander umfassen, welche beispielsweise durch jeweils definierte Abstände und/oder definierte Abstandsänderungen und/oder definierte Winkel und/oder definierte Winkeländerungen gekennzeichnet ist.

Eine definierte Lage des zumindest einen Arbeitswerkzeugs kann die bereits als vorteilhaft angegebene definierte Arbeitstiefe und somit eine definierte (resultierende) Position des zumindest einen Arbeitswerkzeugs in dem Boden und/oder eine definierte (resultierende) Ausrichtung des zumindest einen Arbeitswerkzeugs zu dem Boden und/oder zu der zumindest einen Verstelleinrichtung und/oder zu dem Maschinenrahmen umfassen.

Eine definierte Belastung an dem zumindest einen Arbeitswerkzeug und/oder eine definierte Belastung des Bodens durch das zumindest eine Arbeitswerkzeug kann beispielsweise eine definierte (resultierende) Kraft und/oder einen definierten (resultierenden) Druck umfassen. Bei beispielsweise einer landwirtschaftlichen Sämaschine, welche zumindest ein Arbeitswerkzeug mit einer Vielzahl von Schareinrichtungen umfasst, kann die definierte Belastung einen resultierenden mittleren Schardruck oder jeweils einen resultierenden Schardruck für jeweils eine der Schareinrichtungen umfassen.

Der definierte Betriebszustand des zumindest einen Arbeitswerkzeugs kann durch zumindest einen erfassten, vorzugsweise gemessenen, kinematischen Zustandsparameter und/oder durch eine erfasste, vorzugsweise gemessene, Belastung gekennzeichnet und/oder jeweils davon abhängig sein.

Das Verfahren gemäß der vorliegenden Erfindung zeichnet sich beispielsweise dadurch aus, dass rein kinematische Eigenschaften und/oder Parameter zum Betätigen, vorzugsweise Steuern und/oder Regeln, der zumindest einen Verstelleinrichtung herangezogen werden.

Der kinematische Betätigungszustand kann beispielsweise einen Ist-Betätigungszustand repräsentieren. Der kinematische Betätigungszustand der zumindest einen Verstelleinrichtung kann beispielweise eine Lage und/oder eine Form der zumindest einen Verstelleinrichtung, vorzugsweise eine Lage und/oder eine Form zumindest eines (betätigbaren) Betätigungselements der zumindest einen Verstelleinrichtung umfassen. Der kinematische Betätigungszustand kann vorzugsweise durch zumindest einen kinematischen Zustandsparameter gekennzeichnet sein, wie beispielsweise eine Länge oder eine Längenänderung der zumindest einen Verstelleinrichtung, vorzugsweise zumindest eines Betätigungselements der zumindest einen Verstelleinrichtung.

Ein Betriebszustand der Arbeitsmaschine und somit des zumindest einen Arbeitswerkzeugs ist vorzugsweise derjenige Zustand der Arbeitsmaschine, in welchem die Arbeitsmaschine bestimmungsgemäß und/oder ordnungsgemäß, vor allem zur Gewährleistung der Funktion und Sicherheit, betrieben werden kann und/oder betrieben wird.

Steuern der zumindest einen Verstelleinrichtung, vorzugsweise zumindest eines Betätigungselements der zumindest einen Verstelleinrichtung, erfolgt vorzugsweise in Abhängigkeit des erfassten kinematischen Betätigungszustands, das heißt zumindest eines erfassten kinematischen Zustandsparameters, wobei während des Betätigens und/oder nach dem Betätigen kein Erfassen des (veränderten) kinematischen Betätigungszustands erfolgt.

Regeln der zumindest einen Verstelleinrichtung, vorzugsweise zumindest eines Betätigungselements der zumindest einen Verstelleinrichtung, erfolgt vorzugsweise in Abhängigkeit des erfassten kinematischen Betätigungszustands, das heißt zumindest eines erfassten kinematischen Zustandsparameters, wobei zumindest während des Betätigens und/oder zumindest nach dem Betätigen ein (weiteres oder erneutes) Erfassen des (veränderten) kinematischen Betätigungszustands erfolgt, von welchem wiederum das (weitere oder erneute) Betätigen vorzugsweise abhängig ist.

Mit der vorliegenden Erfindung kann ein Verfahren bereitgestellt werden, mittels welchem die Einstellung des definierten Betriebszustands, vorzugsweise einer definierten Lage zumindest eines Arbeitswerkzeugs zunächst belastungsunabhängig und nur auf Basis kinematischer Eigenschaften und/oder Parameter realisiert wird. Ein Betätigen der zumindest einen Verstelleinrichtung infolge einer Steuerung und/oder einer Regelung der zumindest einen Verstelleinrichtung erfolgt somit nicht durch erfasste veränderte Belastungen (beispielsweise Kraftänderungen oder Druckänderungen) an der zumindest einen Verstelleinrichtung und/oder an dem zumindest einen Arbeitswerkzeug. Mit anderen Worten kann beispielsweise ein Hubweg und somit eine Länge oder eine Längenänderung als kinematischer Zustandsparameter zumindest eines Betätigungselements, beispielsweise in Form eines doppeltwirkenden Hydraulikzylinders, gesteuert und/oder geregelt werden und dies zunächst oder ausschließlich unabhängig von einer auftretenden Belastung an zumindest einem Betätigungselement der zumindest einen Verstelleinrichtung.

Das zumindest eine Arbeitswerkzeug kann vorzugsweise eine Vielzahl an Werkzeugeinrichtungen umfassen. Die zumindest eine Verstelleinrichtung kann zumindest ein Abstützelement, zumindest ein Stellelement und zumindest ein Betätigungselement umfassen. Mit anderen Worten kann die zumindest eine Verstelleinrichtung als eine betätigbare, vorzugsweise steuerbare und/oder regelbare, Verstelleinrichtung ausgebildet sein.

Das zumindest eine Arbeitswerkzeug kann gänzlich über die zumindest eine Verstelleinrichtung an den Maschinenrahmen gekoppelt sein, sodass die zumindest eine Verstelleinrichtung selbst die Funktion einer Trageinheit für das zumindest eine Arbeitswerkzeug ausübt. Das zumindest eine Arbeitswerkzeug kann zum Teil, das heißt teilweise direkt (unmittelbar) an den Maschinenrahmen beweglich gekoppelt sein und ferner mittels der zumindest einen Verstelleinrichtung an den Maschinenrahmen einstellbar beweglich gekoppelt sein.

Gemäß einem weiteren Aspekt der vorliegenden Erfindung kann vorgesehen sein, dass das Verfahren umfasst: • Aufrechthalten des eingestellten definierten Betriebszustands, vorzugsweise der eingestellten definierten Lage, des zumindest einen Arbeitswerkzeugs unabhängig von einer auftretenden und/oder erfassten Belastung (beispielsweise einer Kraft/einem Kräfteverlauf, einem Druck /einem Druckverlauf) an dem zumindest einen Arbeitswerkzeug und/oder an der zumindest einen Verstelleinrichtung; und/oder • Aufrechthalten des eingestellten definierten Betriebszustands, vorzugsweise der eingestellten definierten Lage, des zumindest einen Arbeitswerkzeugs bis zum Erreichen, Ändern und/oder Erfüllen zumindest eines Betriebsparameters, wobei der zumindest eine Betriebsparameter zumindest einen von folgenden umfasst: • eine definierte Arbeitszeitdauer des zumindest einen Arbeitswerkzeugs in dem definierten Betriebszustand; • eine erfasste, vorzugsweise gemessene, definierte Eigenschaft des Bodens; • eine erfasste definierte Belastung an dem zumindest einen Arbeitswerkzeug und/oder an der zumindest einen Verstelleinrichtung; und/oder • eine erfasste definierte Lage des Maschinenrahmens und/oder des zumindest einen Arbeitswerkzeugs.

Eine definierte Belastung kann beispielsweise eine maximale und/oder eine zulässige Belastung umfassen. Eine erfasste Eigenschaft des Bodens kann beispielsweise eine gemessene Feuchtigkeit sein.

Es ist möglich, dass Verfahren umfasst: • Erfassen des kinematischen Betätigungszustands der zumindest einen Verstelleinrichtung in Abhängigkeit einer definierten Frequenz; und/oder • Betätigen der zumindest einen Verstelleinrichtung in Abhängigkeit einer definierten Frequenz; wobei vorzugsweise Erfassen des kinematischen Betätigungszustands der zumindest einen Verstelleinrichtung und Betätigen der zumindest einen Verstelleinrichtung im Wesentlichen gleichzeitig oder im Wesentlichen alternierend (zueinander abwechselnd) erfolgen.

Die definierte Frequenz kann eine vorgegebene und/oder eine einstellbare Frequenz sein. Die definierte Frequenz kann beispielsweise einen Wert von ca. 50 Hertz umfassen.

Durch das Erfassen und/oder Betätigen in Abhängigkeit einer definierten Frequenz kann beispielsweise die Gefahr eines Überschwingens des Betätigens der zumindest einen Verstelleinrichtung reduziert werden.

Erfassen des kinematischen Betätigungszustands der zumindest einen Verstelleinrichtung kann umfassen: • Messen und/oder Abrufen und/oder Berechnen zumindest eines kinematischen Zustandsparameters, durch welchen die zumindest eine Verstelleinrichtung oder zumindest ein Teil der zumindest einen Verstelleinrichtung in Bezug auf eine Lage und/oder in Bezug auf eine Form gekennzeichnet ist.

Abrufen zumindest eines kinematischen Zustandsparameters kann beispielsweise ein Abfragen und Auswählen einer Länge oder einer Längenänderung aus einem Speicherelement umfassen, wobei die abgerufene Länge oder Längenänderung eine Form der zumindest einen Verstelleinrichtung, vorzugsweise zumindest eines Betätigungselements der zumindest einen Verstelleinrichtung, kennzeichnet.

Gemäß einem weiteren Gesichtspunkt der vorliegenden Erfindung kann vorgesehen sein, dass das Verfahren umfasst: • Erfassen einer ersten Lage des zumindest einen Arbeitswerkzeugs in Bezug auf den Boden, vorzugsweise vor einem Betätigen der zumindest einen und/oder in Abhängigkeit einer definierten Frequenz; • Verifizieren der erfassten ersten Lage des zumindest einen Arbeitswerkzeugs mit dem erfassten kinematischen Betätigungszustand der zumindest einen Verstelleinrichtung anhand zumindest eines Verifikationsparameters; • Betätigen der zumindest einen Verstelleinrichtung in Abhängigkeit der erfassten ersten Lage, vorzugsweise verifizierten erfassten ersten Lage, des zumindest einen Arbeitswerkzeugs.

Der zumindest eine Verifikationsparameter kann beispielsweise einen vorgegebenen und/oder definierten und/oder gespeicherten Referenzwert umfassen.

Durch Verifizieren kann beispielsweise ein weiterer ordnungsgemäßer Ablauf des Verfahrens gewährleistet werden.

Es ist möglich, dass das Verfahren umfasst: • Erfassen des definierten Betriebszustands, vorzugsweise der definierten Lage, des zumindest einen Arbeitswerkzeugs, vorzugsweise nach einem Betätigen der zumindest einen Verstelleinrichtung und/oder in Abhängigkeit einer definierten Frequenz; und/oder • Verifizieren des erfassten definierten Betriebszustands, vorzugsweise der erfassten definierten Lage, des zumindest einen Arbeitswerkzeugs mit dem betätigten kinematischen Betätigungszustand der zumindest einen Verstelleinrichtung anhand zumindest eines Verifikationsparameters; • Aufrechthalten des erfassten definierten Betriebszustands, vorzugsweise der erfassten definierten Lage, des zumindest einen Arbeitswerkzeugs in Abhängigkeit des verifizierten erfassten definierten Betriebszustands, vorzugsweise der verifizierten erfassten definierten Lage, des zumindest einen Arbeitswerkzeugs.

Betätigen der zumindest einen Verstelleinrichtung kann umfassen: • Steuern und/oder Regeln zumindest eines Betätigungselements der zumindest einen Verstelleinrichtung in Abhängigkeit zumindest eines kinematischen Zustandsparameters, wobei das zumindest eine Betätigungselement zur Änderung oder zur Verstellung des kinematischen Betätigungszustands der zumindest einen Verstelleinrichtung oder zumindest eines Teils der zumindest einen Verstelleinrichtung, vorzugsweise einer Lage und/oder einer Form der zumindest einen Verstelleinrichtung, infolge Betätigung konfiguriert ist, wobei der zumindest eine kinematische Zustandsparameter zumindest einen von folgenden umfasst, welcher der zumindest einen Verstelleinrichtung und/oder dem zumindest einen Arbeitswerkzeug und/oder dem Maschinenrahmen zugeordnet ist: • eine Länge und/oder eine Längenänderung; • einen Weg und/oder eine Wegänderung; • einen Abstand und/oder eine Abstandänderung; • einen Winkel und/oder eine Winkeländerung; • eine Geschwindigkeit und/oder eine Geschwindigkeitsänderung; • eine Beschleunigung und/oder eine Beschleunigungsänderung; und/oder • ein Lagerungskennfeld zumindest eines Lagerelements des zumindest einen Arbeitswerkzeugs an der zumindest einen Verstelleinrichtung und/oder an dem Maschinenrahmen, vorzugsweise unter Berücksichtigung einer Vorspannbelastung des zumindest einen Lagerelements.

Das Lagerungskennfeld kann beispielweise in Form einer Kraft-Weg-Kurve definiert sein und/oder in einem Speicherelement gespeichert sein.

Steuern und/oder Regeln zumindest eines Betätigungselements der zumindest einen Verstelleinrichtung kann demnach mittels kinematischer Parameter erfolgen, beispielsweise mittels einer definierten Länge oder einer definierten Längenänderung, welche dem zumindest einen Betätigungselement zugeordnet ist.

Die zumindest eine Verstelleinrichtung, vorzugsweise zumindest ein Betätigungselement der zumindest einen Verstelleinrichtung, kann definiert mechanisch, elektrisch, elektromechanisch, hydraulisch und/oder pneumatisch betätigt werden.

Das Verfahren kann umfassen: • Erfassen einer Belastung an dem zumindest einen Arbeitswerkzeug, vorzugsweise in Abhängigkeit einer definierten Frequenz; und • Betätigen der zumindest einen Verstelleinrichtung, vorzugsweise abgestuftes oder intervallförmiges Betätigen der zumindest einen Verstelleinrichtung, wenn die erfasste Belastung an dem zumindest einen Arbeitswerkzeug eine definierte Belastung, beispielsweise eine maximale und/oder eine zulässige Belastung, im Wesentlichen erreicht und/oder übersteigt, um vorzugsweise die erfasste Belastung an dem zumindest einen Arbeitswerkzeug im Wesentlichen konstant oder innerhalb definierter Schwellwertparameter und/oder innerhalb eines definierten Schwellwertparameterbereichs aufrechtzuhalten und/oder einzustellen.

Ein abgestuftes oder intervallförmiges Betätigen der zumindest einen Verstelleinrichtung kann mit anderen Worten durch ein schrittweises Betätigen gekennzeichnet sein, beispielsweise durch eine Steuerung und/oder Regelung zumindest eines Betätigungselements der zumindest einen Verstelleinrichtung mit einer einhergehenden Änderung der Länge des zumindest einen Betätigungselements in Schritten von beispielsweise 0,5 Zentimeter oder 1,0 Zentimeter. Dadurch kann beispielsweise die Gefahr eines Überschwingens der Steuerung und/oder der Regelung der zumindest einen Verstelleinrichtung weiter verringert werden.

Das Verfahren kann umfassen: • Abfragen und Auswählen zumindest eines Kennwertparameters aus einem Speicherelement in Abhängigkeit des erfassten kinematischen Betätigungszustands der zumindest einen Verstelleinrichtung und/oder einer erfassten ersten Lage des zumindest einen Arbeitswerkzeugs; • Betätigen der zumindest einen Verstelleinrichtung, vorzugsweise Steuern und/oder Regeln zumindest eines Betätigungselements der zumindest einen Verstelleinrichtung, in Abhängigkeit des ausgewählten zumindest einen Kennwertparameters, wobei vorzugsweise der zumindest eine Kennwertparameter einem Stellkennfeld der zumindest einen Verstelleinrichtung, vorzugsweise des zumindest einen Betätigungselements, zugeordnet ist und/oder zumindest ein solches umfasst.

Zum Betätigen der zumindest einen zumindest einen Verstelleinrichtung, vorzugsweise Steuern und/oder Regeln zumindest eines Betätigungselements der zumindest einen Verstelleinrichtung, können demnach definierte und/oder gespeicherte Kennwertparameter herangezogen werden. Beispielsweise kann für ein elektrisch antreibbares Betätigungselement in Form eines elektromechanischen Linearaktuators für einen jeweiligen Hubweg oder Hubbereich (beispielsweise ca. 1 Zentimeter bis ca. 5 Zentimeter) eine definierte Zeitdauer und eine definierte Bestromung vorgegeben sein.

Erfassen eines kinematischen Betätigungszustands der zumindest einen Verstelleinrichtung kann umfassen: • Erfassen des kinematischen Betätigungszustands zumindest einer ersten Verstelleinrichtung durch zumindest ein zugeordnetes erstes Sensorelement und zumindest ein zugeordnetes weiteres Sensorelement; und/oder • Erfassen des kinematischen Betätigungszustands zumindest einer zweiten Verstelleinrichtung durch zumindest ein zugeordnetes erstes Sensorelement und zumindest ein zugeordnetes weiteres Sensorelement; und • Berechnen des kinematischen Betätigungszustands der zumindest einen ersten und/oder der zumindest einen Verstelleinrichtung durch Bilden von jeweils zumindest einem Mittelwert aus dem erfassten kinematischen Betätigungszustand der zumindest einen ersten und/oder der zumindest einen zweiten Verstelleinrichtung.

Erfassen des kinematischen Betätigungszustands der zumindest einen Verstelleinrichtung kann umfassen: • Erfassen zumindest eines kinematischen Zustandsparameters durch zumindest ein Sensorelement, welches der zumindest einen Verstelleinrichtung, vorzugsweise zumindest einem Betätigungselement der zumindest einen Verstelleinrichtung, und/oder dem zumindest einen Arbeitswerkzeug und/oder dem Maschinenrahmen zugeordnet ist; und vorzugsweise • Berechnen des kinematischen Betätigungszustands der zumindest einen Verstelleinrichtung durch Bilden von jeweils zumindest einem Mittelwert aus dem erfassten zumindest einen kinematischen Zustandsparameter und einem weiteren erfassten zumindest einen kinematischen Zustandsparameter.

Der erfasste zumindest eine kinematische Zustandsparameter kann ein durch ein erstes Sensorelement gemessener kinematischer Zustandsparameter sein und der weitere erfasste zumindest eine Zustandsparameter kann ein durch ein zweites Sensorelement gemessener kinematischer Zustandsparameter sein.

Die vorliegende Erfindung betrifft nach einem zweiten allgemeinen Gesichtspunkt eine landwirtschaftliche Arbeitsmaschine, vorzugsweise eine mobile und/oder anhängbare und/oder ziehbare landwirtschaftliche Arbeitsmaschine, zur Bearbeitung eines Bodens und/oder zur Einbringung eines landwirtschaftlichen Guts in einen Boden mittels zumindest eines Arbeitswerkzeugs, wobei das zumindest eine Arbeitswerkzeug mittels zumindest einer Verstelleinrichtung an einen Maschinenrahmen der Arbeitsmaschine verstellbar gekoppelt ist, umfassend: • zumindest ein Sensorelement zur Erfassung eines kinematischen Betätigungszustands der zumindest einen Verstelleinrichtung, welcher vorzugsweise in einem Betriebszustand der Arbeitsmaschine einer ersten Lage des zumindest einen Arbeitswerkzeugs in Bezug auf den Boden zugeordnet ist; • eine Automatisierungseinrichtung, vorzugsweise eine Steuerungs- und/oder Regelungseinrichtung, zur Steuerung und/oder Regelung der zumindest einen Verstelleinrichtung, vorzugsweise zumindest eines Betätigungselements der zumindest einen Verstelleinrichtung, in Abhängigkeit des erfassten kinematischen Betätigungszustands bis ein definierter kinematischer Betätigungszustand der zumindest einen Verstelleinrichtung erreicht wird, um einen definierten Betriebszustand, vorzugsweise eine definierte Lage, des zumindest einen Arbeitswerkzeugs in Abhängigkeit des Betätigens der zumindest einen Verstelleinrichtung einzustellen.

Gemäß einem weiteren Gesichtspunkt der vorliegenden Erfindung kann vorgesehen sein, dass die zumindest eine Verstelleinrichtung, vorzugsweise zumindest ein Betätigungselement der zumindest einen Verstelleinrichtung, als zumindest eine von folgenden ausgebildet ist und/oder zumindest eine von folgenden umfasst: • einen Linearaktuator vorzugsweise einen doppeltwirkenden Zylinder oder einen Spindeltrieb; • einen Schwenkaktuator; und/oder • ein Gestänge, vorzugsweise umfassend zumindest ein Abstützelement und/oder zumindest ein Stellelement; und/oder wobei die zumindest eine Verstelleinrichtung, vorzugsweise zumindest ein Betätigungselement der zumindest einen Verstelleinrichtung, mechanisch, elektrisch, elektromechanisch, hydraulisch und/oder pneumatisch betätigbar ausgebildet ist.

Der Spindeltrieb kann als ein mechanisch angetriebener oder als ein elektrisch angetriebener, das heißt als ein elektromotorisch betätigbarer Spindeltrieb ausgebildet sein.

Es ist möglich, dass das zumindest eine Sensorelement als zumindest eines von folgenden ausgebildet ist und/oder zumindest eines von folgenden umfasst: einen Abstands-/Wegsensor, einen Lagesensor, einen Beschleunigungssensor, einen Drehratensensor, einen GPS-Sensor, einen optischen Sensor und/oder einen Ultraschallsensor und/oder einen Kraftsensor und/oder einen Drucksensor.

Gemäß einem weiteren Aspekt der vorliegenden Erfindung kann vorgesehen sein, dass die Arbeitsmaschine, vorzugsweise die Automatisierungseinrichtung, zumindest ein Speicherelement mit zumindest einem Kennwertparameter umfasst, wobei der zumindest eine Kennwertparameter zur Betätigung der zumindest einen Verstelleinrichtung, vorzugsweise zur Steuerung und/oder Regelung des zumindest eines Betätigungselements der zumindest einen Verstelleinrichtung, konfiguriert ist.

Die zumindest eine Verstelleinrichtung kann als eine selbsthemmende Verstelleinrichtung ausgebildet und konfiguriert sein, um vorzugsweise vor und/oder nach einer Betätigung eine Änderung zumindest des definierten kinematischen Betätigungszustands oder zumindest eines Teils davon infolge einer Belastung, vorzugsweise durch den Maschinenrahmen und/oder durch das zumindest eine Arbeitswerkzeug, zu verhindern oder zumindest teilweise definiert zu beschränken.

Mit anderen Worten kann die zumindest Verstelleinrichtung als selbsthemmende Verstelleinrichtung konfiguriert sein, infolge einer übertragenen Belastung des Maschinenrahmens und/oder des zumindest einen Arbeitswerkzeugs zu blockieren und somit keine Änderung des kinematischen Betätigungszustands durchzuführen. Die zumindest eine Verstelleinrichtung kann somit infolge der Einwirkung einer äußeren Belastung nicht verstellt oder nur zumindest teilweise definiert verstellt werden.

Die zumindest eine Verstelleinrichtung kann als selbsthemmende Verstelleinrichtung zumindest ein Stützelement und zumindest ein Stellelement umfassen, welche beispielsweise jeweils als Lenker oder als Hebel ausgebildet sind und welche zur Realisierung einer Hemmungsfunktion für eingeleitete und/oder übertragene (äußere) Belastungen entsprechend miteinander gekoppelt sind und/oder zusammenwirken.

Die landwirtschaftliche Arbeitsmaschine kann zur Ausführung eines Verfahrens wie hierin offenbart konfiguriert sein.

Zur Vermeidung von Wiederholungen sollen rein auf die Vorrichtung der erfindungsgemäßen landwirtschaftlichen Arbeitsmaschine gerichtete und/oder damit in Zusammenhang offenbarte Merkmale auch als verfahrensgemäß offenbart gelten und beanspruchbar sein und umgekehrt.

Die zuvor beschriebenen Ausführungsbeispiele und Merkmale der vorliegenden Erfindung sind beliebig miteinander kombinierbar. Weitere oder andere Einzelheiten und vorteilhafte Wirkungen der vorliegenden Erfindung werden im Folgenden unter Bezugnahme auf die beigefügten Figuren näher erläutert.

Es zeigen:
- Fig. 1: einen Teil eines Ausführungsbeispiels der landwirtschaftlichen Arbeitsmaschine gemäß der vorliegenden Erfindung in einer perspektivischen Ansicht;
- Fig. 2: den Teil der landwirtschaftlichen Arbeitsmaschine aus Figur 1 in einer Seitenansicht (Ansicht X in Figur 1), wobei ein Abschnitt in einer Schnittansicht dargestellt ist;
- Fig. 3: einen Ausschnitt (Ausschnitt Z in Figur 1) der landwirtschaftlichen Arbeitsmaschine aus Figur 1 in vergrößerter Darstellung;
- Fig. 4: ein Ablaufdiagramm eines Ausführungsbeispiels des Verfahrens gemäß der vorliegenden Erfindung;
- Fig. 5: einen Teilaspekt des Verfahrens gemäß der vorliegenden Erfindung in Bezug auf die Betätigung eines Betätigungselements der Verstelleinrichtung.

Gleiche oder funktional äquivalente Komponenten oder Elemente sind in den Figuren mit denselben Bezugszeichen gekennzeichnet. Zu deren Erläuterung wird teilweise auch auf die Beschreibung anderer Ausführungsbeispiele und/oder Figuren verwiesen, um Wiederholungen zu vermeiden.

Die folgende detaillierte Beschreibung der in den Figuren dargestellten Ausführungsbeispiele dient zur näheren Veranschaulichung oder Verdeutlichung und soll den Umfang der vorliegenden Erfindung in keiner Weise beschränken.

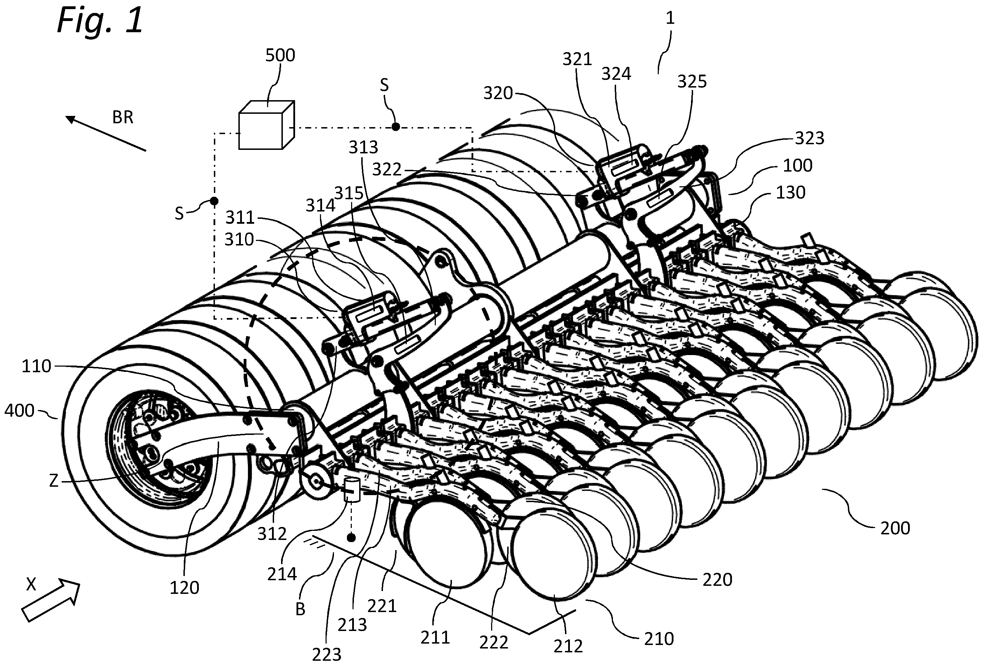

Figur 1 zeigt in einer perspektivischen Ansicht einen Teil eines Ausführungsbeispiels der erfindungsgemäßen landwirtschaftlichen Arbeitsmaschine 1. Nachfolgend wird die landwirtschaftliche Arbeitsmaschine auch abgekürzt als "Arbeitsmaschine 1" bezeichnet.

Die Arbeitsmaschine 1 ist vorzugsweise eine mobile anhängbare und/oder ziehbare Arbeitsmaschine 1 zur Bearbeitung eines Bodens B und/oder zur Einbringung und/oder zur Verteilung eines landwirtschaftlichen Guts in den Boden B, wobei die Einbringung und/oder Verteilung des landwirtschaftlichen Guts vorzugsweise die Aussaat von Saatgut und/oder die Düngung mit Düngemittel umfasst. Mit anderen Worten ist die Arbeitsmaschine 1 eine an eine Zugmaschine anhängbare Arbeitsmaschine 1. Die Zugmaschine ist vorzugsweise eine landwirtschaftliche Zugmaschine und in den Figuren aus Gründen der Übersichtlichkeit nicht dargestellt. Die Zugmaschine kann beispielsweise ein Ackerschlepper in Form eines Radtraktors oder eines Raupentraktors sein. Es ist ferner möglich, dass die Zugmaschine ein sogenannter Agrotruck ist. Vorzugsweise umfasst die Zugmaschine ein eigenes Antriebsaggregat und stellt unter anderem in einem Betriebszustand der Arbeitsmaschine 1 eine resultierende und/oder idealisierte Betriebszugkraft zum Ziehen und somit zum Bewegen der Arbeitsmaschine 1 in einer Bewegungsrichtung BR zur Verfügung. Die Bewegungsrichtung BR kann die Fahrtrichtung und/oder die Zugrichtung der Arbeitsmaschine 1 sein.

Ein Betriebszustand der Arbeitsmaschine 1 ist vorzugsweise derjenige Zustand der Arbeitsmaschine 1, in welchem die Arbeitsmaschine 1 bestimmungsgemäß und/oder ordnungsgemäß, vor allem zur Gewährleistung der Funktion und Sicherheit, betrieben werden kann und/oder betrieben wird. Mit anderen Worten betrifft oder umfasst der Betriebszustand die Feldarbeit der Arbeitsmaschine 1.

Die Arbeitsmaschine 1 umfasst einen Maschinenrahmen 100, welcher unter anderem zur Anordnung und/oder zum Tragen zumindest eines Arbeitswerkzeugs 200 der Arbeitsmaschine 1 konfiguriert ist, was nachfolgend noch näher erläutert wird. Der Maschinenrahmen 100 kann als Haupttragrahmen der Arbeitsmaschine 1 oder als ein Bestandteil des Haupttragrahmens der Arbeitsmaschine 1 ausgebildet sein. Alternativ kann der Maschinenrahmen 100 als separat ausgebildeter Rahmen an einem Haupttragrahmen der Arbeitsmaschine 1 angeordnet sein.

Bei dem gezeigten Ausführungsbeispiel umfasst der Maschinenrahmen 100 eine Tragstruktur 110 zur Aufnahme und/oder zum Abstützen zumindest einer Verstelleinrichtung 310, 320, das heißt einer ersten Verstelleinrichtung 310 und einer zweiten Verstelleinrichtung 320. Die Anzahl an Verstelleinrichtungen 310, 320 kann in Abhängigkeit der Konfiguration des zumindest einen Arbeitswerkzeugs 200 und/oder in Abhängigkeit der Anzahl an Arbeitswerkzeugen 200 und/oder in Abhängigkeit der Konfiguration der Tragstruktur 110 variieren. Die Tragstruktur 110 ist im Wesentlichen in Form eines Rohrs ausgebildet oder umfasst zumindest ein Rohr, welches durch einen im Wesentlichen kreisrunden Querschnitt gekennzeichnet ist. Alternativ kann die Tragstruktur 110 rohrförmig mit einem im Wesentlichen quadratischen Querschnitt oder mit einem im Wesentlichen rechteckförmigen Querschnitt ausgebildet sein. Die Tragstruktur 110 erstreckt sich im Wesentlichen quer zu der Bewegungsrichtung BR.

An der Tragstruktur 110 ist über jeweilige Schenkel 120 des Maschinenrahmens 100 zumindest eine Abstützeinrichtung 400 in Form einer Walze angeordnet. Die Walze 400 kann beispielsweise als eine Zahnpackerwalze, eine Disc-Packerwalze, eine Doppel-Disc-Packerwalze, eine Doppelprofilring-Packerwalze, eine Reifen-Packerwalze, und/oder als eine Packerprofilwalze ausgebildet sein und/oder jeweils zumindest eine solche umfassen.

Die Tragstruktur 100 kann wiederum selbst an einem Tragrahmen der Arbeitsmaschine 1 verstellbar angeordnet sein.

Das zumindest eine Arbeitswerkzeug 200 wird nachfolgend vereinfacht abgekürzt als "Arbeitswerkzeug 200" bezeichnet. Selbstverständlich kann die Arbeitsmaschine 1 auch mehr als ein Arbeitswerkzeug 200 und somit eine Vielzahl an Arbeitswerkzeugen umfassen.

Das Arbeitswerkzeug 200 umfasst mehrere Werkzeugeinrichtungen 210, 220, von welchen aus Gründen der Übersichtlichkeit in Figur 1 nur die Werkzeugeinrichtungen 210 und 220 gekennzeichnet sind. Insgesamt umfasst das in Figur 1 dargestellte, das heißt sichtbare Arbeitswerkzeug 200 zwanzig Werkzeugeinrichtungen 210, 220.

Die Werkzeugeinrichtungen 210, 220 sind in Form von Schareinrichtungen 210, 220 ausgebildet und umfassen jeweils eine Schneidscheibeneinheit 211, 221 mit zumindest einer Schneidscheibe zur Erzeugung einer Furche in dem Boden B und jeweils eine Nachlaufrolleneinheit 212, 222 mit zumindest einer Rolle zur Führung der jeweiligen Schareinrichtung 210, 220 in der Furche und/oder zum Andrücken des Bodens B in der Furche und/oder zum Schließen der Furche und/oder zum Abbremsen des landwirtschaftlichen Guts im Bereich der Furche. Die jeweilige Schneidscheibeneinheit 211, 221 ist mit der jeweiligen Nachlaufrolleneinheit 212, 222 über jeweils einen Lenker 213, 223 verbunden.

Die Lenker 213, 223 sind wiederum jeweils mittels Lagerelementen und vorzugsweise mittels Elastomer-Körpern an einem Tragelement 130 des Maschinenrahmens 100 in Form eines Rohrs mit einem im Wesentlichen quadratischen Querschnitt gelagert. Die Lagerelemente sind aus Gründen der Übersichtlichkeit in den Figuren nicht gekennzeichnet. Jede Schareinrichtung 210, 220 kann jeweils zumindest eine Leitungseinheit zum Transport des landwirtschaftlichen Guts umfassen, wobei die zumindest eine Leitungseinheit zumindest einen Auslass zur Zuführung des landwirtschaftlichen Guts in die Furche umfasst.

Zusätzlich können die Schareinrichtungen 210, 220 jeweils eine Kufeneinheit mit zumindest einer Kufe und/oder eine weitere Rolleneinheit mit zumindest einer Rolle zum Abbremsen des landwirtschaftlichen Guts im Bereich der Furche aufweisen.

Die Arbeitsmaschine 1 kann somit als kombinierte landwirtschaftliche Arbeitsmaschine 1 zur Bodenbearbeitung und /oder zur Aussaat eines landwirtschaftlichen Guts ausgebildet sein. Es versteht sich, dass die Arbeitsmaschine 1 als Sämaschine einen Behälter zur Bevorratung des landwirtschaftlichen Guts in Form von Saatgut, beispielsweise in Körnerform oder in Granulatform, umfasst, sowie eine Fördereinrichtung zum Transport des landwirtschaftlichen Guts zu den Schareinrichtungen 210, 220.

Es ist zusätzlich oder alternativ möglich, dass die Arbeitsmaschine 1 weitere und/oder andere, das heißt verschiedene Arbeitswerkzeuge 200 umfasst, beispielsweise Grubbereinrichtungen zur Lockerung und/oder Krümelung des Bodens B und/oder zur Einarbeitung von landwirtschaftlichen Materialien in den Boden B, Eggeneinrichtungen zur Lockerung und/oder Zerkleinerung des Bodens B, Schleudereinrichtungen zur Ausbringung und/oder Verteilung eines landwirtschaftlichen Guts, und/oder Drilleinrichtungen zum Ablegen eines landwirtschaftlichen Guts in den Boden B.

Vorzugsweise umfasst die Arbeitsmaschine 1 mehrere Arbeitswerkzeuge 200, welche in der Bewegungsrichtung BR hintereinander und/oder nebeneinander angeordnet sein können.

Das Arbeitswerkzeug 200 ist mittels der ersten Verstelleinrichtung 310 und mittels der zweiten Verstelleinrichtung 320 an den Maschinenrahmen 100 verstellbar gekoppelt und somit gegenüber dem Maschinenrahmen 100 beweglich und/oder einstellbar. Sowohl die erste Verstelleinrichtung 310 als auch die zweite Verstelleinrichtung 320 ist jeweils konfiguriert, eine Lage des Arbeitswerkzeugs 200 infolge Betätigung einzustellen. Mit anderen Worten sind die Verstelleinrichtungen 310, 320 betätigbare Verstelleinrichtungen 310, 320. Mittels der ersten Verstelleinrichtung 310 und mittels der zweiten Verstelleinrichtung 320 kann ein Betriebszustand, vorzugsweise eine Lage des Arbeitswerkzeugs 200 eingestellt werden, und zwar in Bezug auf den Boden B, in Bezug auf den Maschinenrahmen 100 und/oder in Bezug auf die übrige Arbeitsmaschine 1.

Die Lage des Arbeitswerkzeugs 200 umfasst vorzugsweise eine Position, beispielsweise einen resultierenden Abstand des Arbeitswerkzeugs 200, vorzugsweise zumindest eines Referenzpunkts oder zumindest einer Referenzfläche des Arbeitswerkzeugs 200, zu dem Boden B und/oder zu dem Maschinenrahmen 100. Zusätzlich oder alternativ umfasst die Lage des Arbeitswerkzeugs 200, vorzugsweise zumindest einer Referenzfläche des Arbeitswerkzeugs 200, eine Ausrichtung des Arbeitswerkzeugs 200, vorzugsweise eine resultierende Neigung des Arbeitswerkzeugs 200 zu dem Boden B und/oder zu dem Maschinenrahmen 100 um beispielsweise eine resultierende Nickachse (Querachse), Rollachse (Längsachse) und/oder Gierachse (Vertialachse/Hochachse).

Die Verstelleinrichtungen 310 und 320 sind vorzugsweise zueinander im Wesentlichen identisch ausgebildet. Die erste Verstelleinrichtung 310 umfasst das Betätigungselement 311, das Abstützelement 312 und das Stellelement 313. Analog zu der ersten Verstelleinrichtung 310 umfasst die zweite Verstelleinrichtung 320 das Betätigungselement 321, das Abstützelement 322 und das Stellelement 323. Das jeweilige Betätigungselement 311, 321 ist mit dem jeweiligen Abstützelement 312, 322 sowie mit dem jeweiligen Stellelement 313, 323 gelenkig gelagert und zur Übertragung von Kräften infolge einer Betätigung des Betätigungselements 311, 321 konfiguriert.

Die Stellelemente 313 und 323 sind vorzugsweise als Hebel oder als Lenker ausgebildet und jeweils gelenkig, vorzugsweise schwenkbar, an der Tragstruktur 110 gelagert. Ferner ist das Arbeitswerkzeug 200 mit den Stellelementen 313 und 323 fest verbunden, beispielsweise mittels Schraubverbindungen, womit in Verbindung mit der Lagerung des Arbeitswerkzeugs 200, das heißt der Schareinrichtungen 210, 220 an dem Tragelement 130 die Möglichkeit realisiert wird, die Lage des Arbeitswerkzeugs 200 infolge einer Betätigung der Betätigungselemente 311, 321 zu verstellen.

Die Verstelleinrichtungen 310, 320 und vor allem die Betätigungselemente 311, 321 können je nach Ausführungsbeispiel der Arbeitsmaschine 1 unterschiedlich ausgebildet und/oder konfiguriert sein. Es ist möglich, dass eine Verstelleinrichtung 310, 320 und vorzugsweise ein Betätigungselement 311, 321 der jeweiligen Verstelleinrichtung 310, 320 als zumindest eine von folgenden ausgebildet ist und/oder zumindest eine von folgenden umfasst: einen Linearaktuator, beispielsweise in Form eines doppeltwirkenden Zylinders oder in Form eines Spindeltriebs; einen Schwenkaktuator; und/oder ein Gestänge mit einer definierten Übersetzung, vorzugsweise umfassend zumindest ein Abstützelement 312, 322 und/oder zumindest ein Stellelement 313, 323.

Bei dem vorliegenden Ausführungsbeispiel sind die Betätigungselemente 311 und 312 jeweils als elektromechanischer Linearaktuator ausgebildet und umfassen jeweils einen betätigbaren Elektromotor zur Betätigung, wodurch mitunter eine Änderung der Form des Betätigungselements 311, 312 infolge einer Betätigung einhergeht.

Die Verstelleinrichtungen 310, 320, vorzugsweise die Betätigungselemente 311, 321, können in jeweiligen Ausführungsbeispielen der Arbeitsmaschine 1 mechanisch, elektrisch, elektromechanisch, hydraulisch und/oder pneumatisch betätigbar ausgebildet sein.

Mittels Betätigung der Verstelleinrichtungen 310, 320 ist es möglich, einen definierten Betriebszustand, vorzugsweise eine definierte Lage des Arbeitswerkzeugs 1, besonders bevorzugt auf dem Boden B und/oder abschnittsweise in dem Boden B und/oder abschnittsweise über dem Boden B und/oder zu dem Maschinenrahmen 100 einzustellen. Die Verstelleinrichtungen 310, 320 sind somit konfiguriert, das Arbeitswerkzeug 200 translatorisch und/oder rotatorisch zu bewegen. Hierbei verändern die Verstelleinrichtungen 310, 320 infolge einer Betätigung im Zuge einer Regelung und/oder Steuerung selbst zumindest abschnittsweise jeweils ihre Lage und/oder zumindest abschnittsweise jeweils ihre Form.

Die Verstelleinrichtungen 310, 320 umfassen ferner Sensorelemente 314, 315; 324, 325 zur Erfassung eines kinematischen Betätigungszustands der jeweiligen Verstelleinrichtung 310, 320, wobei vorzugsweise der erfasste kinematische Betätigungszustand in einem Betriebszustand der Arbeitsmaschine 1 einer Lage des Arbeitswerkzeugs 200 in Bezug auf den Boden B zugeordnet ist oder dazu korreliert. Die Sensorelemente 314, 315, 324, 325 sind vorzugsweise konfiguriert, jeweils zumindest einen kinematischen Zustandsparameter zu erfassen, wobei der zumindest eine kinematische Zustandsparameter zumindest einen von folgenden umfasst, welcher den Verstelleinrichtungen 310, 320, vorzugsweise den Betätigungselementen 311, 321, und/oder dem Arbeitswerkzeug 200 und/oder dem Maschinenrahmen 100 zugeordnet sein kann: eine Länge und/oder eine Längenänderung; einen Weg und/oder eine Wegänderung; einen Abstand und/oder eine Abstandänderung; einen Winkel und/oder eine Winkeländerung; eine Geschwindigkeit und/oder eine Geschwindigkeitsänderung; eine Beschleunigung und/oder eine Beschleunigungsänderung; und/oder ein Lagerungskennfeld zumindest eines Lagerelements zur Lagerung des Arbeitswerkzeugs 200 an den Verstelleinrichtungen 310, 320 und/oder an dem Maschinenrahmen 100, vorzugsweise unter Berücksichtigung einer Vorspannbelastung des zumindest einen Lagerelements.

Das Sensorelement 314 ist an dem Betätigungselement 311 angeordnet und das Sensorelement 315 ist an dem Stellelement 313 angeordnet. Das Sensorelement 324 ist an dem Betätigungselement 321 angeordnet und das Sensorelement 325 ist an dem Stellelement 323 angeordnet.

Darüber hinaus ist an der Schareinrichtung 210 das Sensorelement 214 angeordnet, welches zur Erfassung eines kinematischen Betätigungszustands, vorzugsweise zumindest eines kinematischen Zustandsparameters, der jeweiligen Verstelleinrichtung 310, 320 und/oder einer Lage des Arbeitswerkzeugs 200, vorzugsweise zumindest der Schareinrichtung 210, konfiguriert ist. Bei einem alternativen Ausführungsbeispiel ist es möglich, dass an jeder Schareinrichtung 210, 220, beispielsweise an jedem jeweiligen Lenker 213, 223 der Schareinrichtungen 210, 220 jeweils ein Sensorelement 214 angeordnet ist.

Es versteht sich, dass weitere Sensorelemente 214, 314, 315, 324, 325 an weiteren oder anderen Stellen der Verstelleinrichtungen 310, 320 und/oder des Arbeitswerkzeugs 200 angeordnet sein können.

Zumindest ein Sensorelement 214, 314, 315, 324, 325 kann als zumindest eines von folgenden ausgebildet sein und/oder zumindest eines von folgenden umfassen: einen Abstands-/Wegsensor, einen Lagesensor, einen Beschleunigungssensor, einen Drehratensensor, einen GPS-Sensor, einen optischen Sensor und/oder einen Ultraschallsensor und/oder einen Kraftsensor und/oder einen Drucksensor.

Die Arbeitsmaschine 1 umfasst darüber hinaus eine Automatisierungseinrichtung 500, vorzugsweise eine Steuerungs- und/oder Regelungseinrichtung 500, welche in Figur 1 lediglich schematisch dargestellt ist. Die Automatisierungseinrichtung 500 dient zur Steuerung und/oder Regelung der Betätigung der Verstelleinrichtungen 310, 320 und somit der Verstelleinrichtungen 310, 320, vorzugsweise der Betätigungselemente 311, 321 der Verstelleinrichtungen 310, 320, zumindest in Abhängigkeit eines erfassten kinematischen Betätigungszustands der Verstelleinrichtungen 310, 320 bis ein definierter kinematischer Betätigungszustand der Verstelleinrichtungen 310, 320 erreicht wird, um den definierten Betriebszustand, vorzugsweise die definierte Lage, des Arbeitswerkzeugs 200 in Abhängigkeit des Betätigens der Verstelleinrichtungen 310, 320 einzustellen.

Zur Steuerung und/oder Regelung der Verstelleinrichtungen 310, 320 kann die Automatisierungseinrichtung 500 zur Verarbeitung weiterer Kennwerte und/oder Parameter wie hierin offenbart konfiguriert sein.

Die Automatisierungseinrichtung 500 kann als eine signalverarbeitende elektronische Recheneinheit, beispielsweise nach der Von-Neumann-Architektur, konfiguriert sein oder zumindest eine solche umfassen, und somit zumindest ein Rechenwerk mit zumindest einem Rechenkern (Zentraleinheit, Prozessor), ein Steuerwerk, ein Bussystem, ein Eingabe-/Ausgabewerk, ein Speicherelement zur Speicherung von Kennwerten und/oder Parametern und weitere Komponenten und Elemente aufweisen. Das Rechenwerk kann zur Ausführung zumindest eines Algorithmus des Verfahrens wie hierin offenbart konfiguriert sein und/der vorzugsweise mehrere Rechenkerne umfassen. Mit anderen Worten kann die signalverarbeitende elektronische Recheneinheit als Digitalrechner ausgebildet sein, um elektrische/elektronische Signale S zu verarbeiten und/oder zu übertragen, das heißt zu empfangen und/oder zu senden.

Die Steuerung und/oder Regelung der Verstelleinrichtungen 310, 320 kann mittels elektrisch/elektronisch auswertbarer Signale S und/oder elektrisch/elektronisch verarbeitbarer Signale S erfolgen. Es versteht sich, dass vorzugsweise die Sensorelemente 214, 314, 315, 324, 325 mit der Automatisierungseinrichtung 500 mittels eines Signalkommunikationsnetzwerks, das heißt mittels eines Bussystems miteinander kommunizieren. Übertragene Signals S umfassen insbesondere eine jeweilige Information und/oder repräsentieren eine jeweilige Information, vorzugsweise in Bezug auf einen kinematischen Betätigungszustand und besonderes bevorzugt in Bezug auf zumindest einen kinematischen Zustandsparameter.

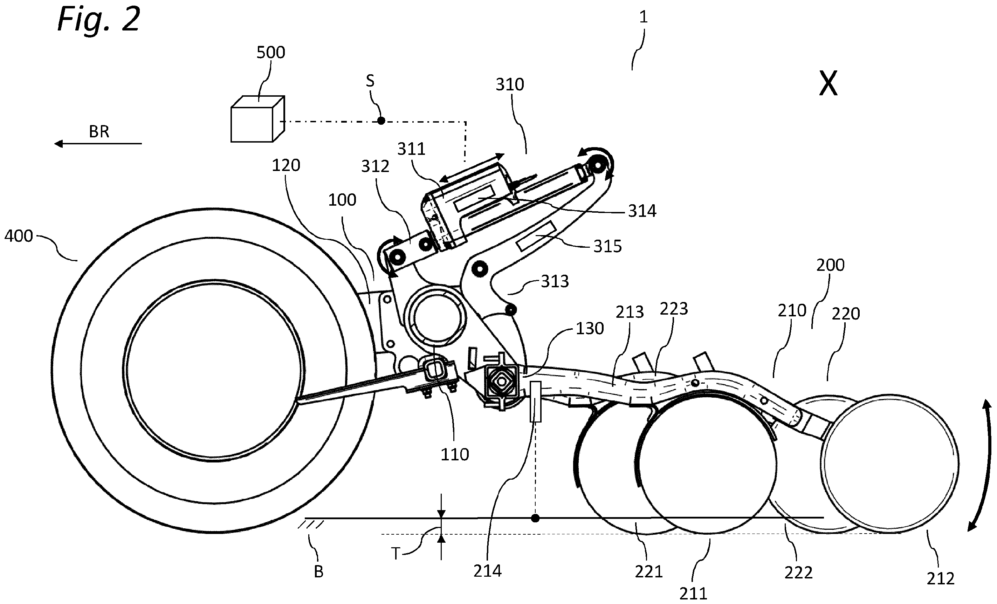

Figur 2 zeigt den Teil der Arbeitsmaschine 1 aus Figur 1 in einer Seitenansicht (Ansicht X in Figur 1), wobei ein Abschnitt in einer Schnittansicht dargestellt ist. Demnach ist ein Teil der Abstützeinrichtung 400 sowie ein Schenkel 120 zur Anordnung der Abstützeinrichtung 400 nicht sichtbar.

Gut erkennbar ist die Konfiguration der sichtbaren Verstelleinrichtung 310 mit dem Abstützelement 312, dem Betätigungselement 311 und dem Stellelement 313 und eine damit einhergehende Änderung des kinematischen Betätigungszustands der Verstelleinrichtung 310 und damit einer Änderung der Lage des Arbeitswerkzeugs 200 infolge einer Betätigung des Betätigungselements 311 im Zuge einer Steuerung und/oder Regelung durch die Automatisierungseinrichtung 500 in Verbindung mit den Sensorelementen 214, 314, 315, 324, 325.

Die kinematischen Bewegungsmöglichkeiten der Elemente der Verstelleinrichtung 310 sind an jeweiligen Gelenken durch gekrümmte Doppelpfeile gekennzeichnet. Ebenfalls ist die Veränderung, das heißt eine Längenänderung des Betätigungselements 311 infolge einer Betätigung durch einen Doppelpfeil gekennzeichnet.

Das Arbeitswerkzeug 200 kann mittels der Verstelleinrichtungen 310, 320 in einen definierten Betriebszustand, vorzugsweis in eine definierte Lage, bewegt und/oder verstellt werden. Die definierte Lage kann beispielsweise eine bestimmte resultierende und/oder eine hinreichende Arbeitstiefe T des Arbeitswerkzeugs 200 und eine dazugehörige Ausrichtung des Arbeitswerkzeugs 200, vorzugsweise in Abhängigkeit von erfassten Eigenschaften des Bodens B, umfassen. Mit anderen Worten kann das Arbeitswerkzeug 200 durch die Verstelleinrichtungen 310, 320 infolge Betätigung in eine definierte Lage geschwenkt werden. Die Betätigungselemente 311, 321 können gesteuert und/oder geregelt werden und somit eine definierte Längenänderung durchführen, sodass sich die Lage und die Form der Verstelleinrichtungen 310, 320 oder zumindest eines Teils der Verstelleinrichtungen 310, 320 verändert, was wiederum ein entsprechendes Ändern der Lage des Arbeitswerkzeugs 200 zur Folge hat.

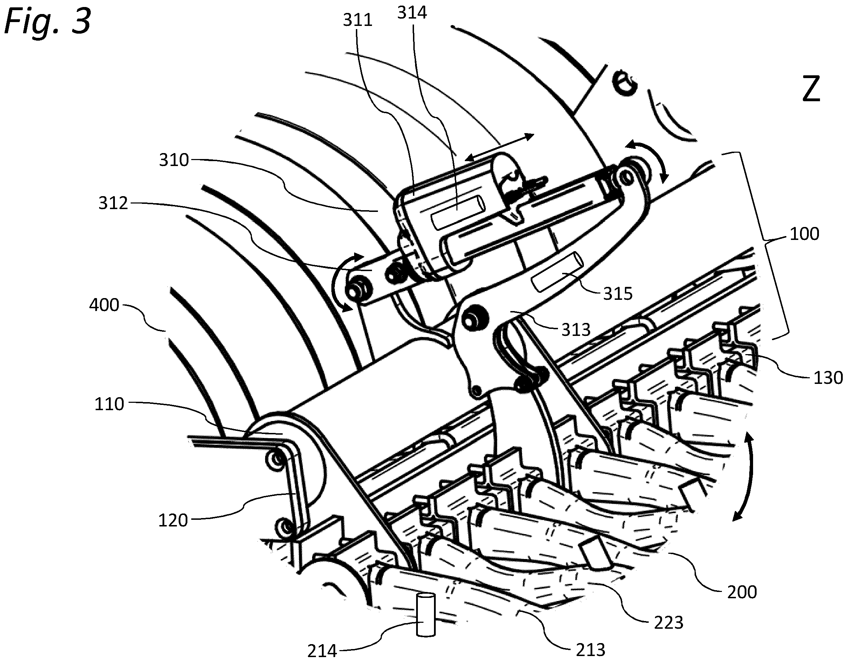

Figur 3 zeigt einen Ausschnitt (Ausschnitt Z in Figur 1) der Arbeitsmaschine 1 aus Figur 1 in vergrößerter Darstellung, um zumindest den Bereich der Verstelleinrichtung 310 in einer Detailansicht graphisch näher darzustellen.

Gut erkennbar sind in dieser Darstellung die Lagerelemente der jeweiligen Schareinrichtungen 210, 220 an dem Tragelement 130, welche aus Gründen der Übersichtlichkeit in den Figuren nicht näher gekennzeichnet sind.

Ferner ist erkennbar, dass das Abstützelement 312 an einer Halterung der Tragstruktur 110 gelenkig gelagert ist und sich dort abstützt. Das Stellelement 313 ist mittels Schraubverbindungen fest mit einem Lenker oder Hebel des Arbeitswerkzeugs 200 verbunden, wodurch die Betätigung des Betätigungselements 311 mittels des Stellelements 313 auf das Arbeitswerkzeug 200 in einer definierten Übersetzung übertragen werden kann.

Die Arbeitsmaschine 1 ist vorzugsweise zur Ausführung des Verfahrens wie hierin offenbart konfiguriert, was nachfolgend anhand eines Ausführungsbeispiels näher erläutert wird.

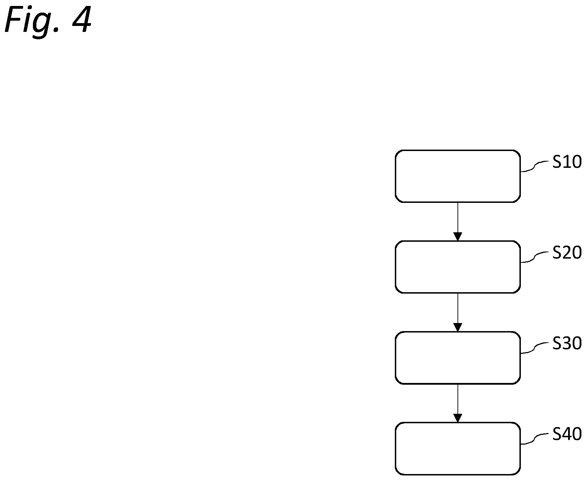

Figur 4 zeigt ein Ablaufdiagramm eines Ausführungsbeispiels des Verfahrens gemäß der vorliegenden Erfindung. Nachfolgend werden Abschnitte und/oder Phasen des Ausführungsbeispiels des Verfahrens beschrieben, wobei nur teilweise auf Einrichtungen, Einheiten und/oder Elemente der Arbeitsmaschine 1 Bezug genommen wird, um Wiederholungen zu vermeiden.

Das Verfahren zur Einstellung eines definierten Betriebszustands, vorzugsweise einer definierten Lage, des Arbeitswerkzeugs 200 einer Arbeitsmaschine 1 zur Bearbeitung eines Bodens B und/oder zur Einbringung eines landwirtschaftlichen Guts in einen Boden B beginnt in Abschnitt S10 mit dem Erfassen eines kinematischen Betätigungszustands der jeweiligen Verstelleinrichtung 310, 320, welcher vorzugsweise in einem Betriebszustand der Arbeitsmaschine 1 einer ersten Lage des Arbeitswerkzeugs 200 in Bezug auf den Boden B zugeordnet ist und/oder dazu korreliert.

Erfassen des kinematischen Betätigungszustands kann hierbei umfassen: Messen und/oder Abrufen und/oder Berechnen zumindest eines kinematischen Zustandsparameters, durch welchen die jeweilige Verstelleinrichtung 310, 320 oder zumindest ein Teil der jeweiligen Verstelleinrichtung 310, 320 in Bezug auf eine Lage und/oder in Bezug auf eine Form, vorzugsweise zum Zeitpunkt oder innerhalb der Zeitdauer des Erfassens, gekennzeichnet ist.

Um beispielsweise den kinematischen Betätigungszustand der Verstelleinrichtung 310 zu erfassen, kann das Sensorelement 314 und/oder das Sensorelement 315 eine Länge und/oder eine Längenänderung des Betätigungselements 311, einen Abstand und/oder eine Abstandsänderung zwischen dem Abstützelement 312 und/oder dem Betätigungselement 311 und dem Stellelement 313, und/oder einen jeweiligen resultierenden Winkel zwischen dem Abstützelement 312 und/oder dem Betätigungselement 311 und dem Stellelement 313 messen.

Mit anderen Worten werden in Abschnitt S10 vorzugsweise zunächst nur kinematische Zustandsparameter und somit kinematische Eigenschaften der Verstelleinrichtungen 310, 320 erfasst, welche einen kinematischen Betätigungszustand und somit eine entsprechende Lage und eine entsprechende Form der Verstelleinrichtungen 310, 320, vorzugsweise zum Zeitpunkt oder innerhalb der Zeitdauer des Erfassens, beschreiben und welche einer ersten Lage des Arbeitswerkzeugs 200 zugeordnet sind und/oder dazu korrelieren.

Zusätzlich kann in Abschnitt S10 ein Erfassen einer ersten Lage des Arbeitswerkzeugs 200, vorzugsweise in Bezug auf den Boden B, das heißt zu dem Boden B und/oder an dem Boden B und/oder in dem Boden B erfolgen. Das Erfassen der ersten Lage des Arbeitswerkzeugs 200 kann beispielsweise mittels des Sensorelements 214 an dem Arbeitswerkzeug 200 erfolgen.

Anschließend an das Erfassen einer ersten Lage des Arbeitswerkzeugs 200 kann ein Verifizieren der erfassten ersten Lage des Arbeitswerkzeugs 200 mit dem erfassten kinematischen Betätigungszustand der Verstelleinrichtungen 310, 320 anhand zumindest eines Verifikationsparameters erfolgen. Der zumindest eine Verifikationsparameter kann beispielsweise zumindest einen abgespeicherten Referenzwert oder einen Bereich zwischen zwei abgespeicherten Referenzwerten umfassen, welcher/welche beispielsweise in einem Speicherelement der Automatisierungseinrichtung 500 gespeichert ist/sind. Durch eine erfolgreiche Verifikation kann beispielsweise ein weiterer ordnungsgemäßer Ablauf des Verfahrens und somit die Realisierung der bestimmungsgemäßen Funktion des Arbeitswerkzeugs 200 gewährleistet werden.

In Abschnitt S20 erfolgt ein Betätigen der Verstelleinrichtungen 310, 320 in Abhängigkeit des erfassten kinematischen Betätigungszustands der Verstelleinrichtungen 310, 320 bis ein definierter kinematischer Betätigungszustand der Verstelleinrichtungen 310, 320 erreicht wird.

Das Betätigen der Verstelleinrichtungen 310, 320 umfasst mit Blick auf das Ausführungsbeispiel der Arbeitsmaschine 1 der Figuren 1 bis 3 vorzugsweise ein Steuern und/oder ein Regeln der Betätigungselemente 311, 321 der Verstelleinrichtungen 310, 320 in Abhängigkeit zumindest eines kinematischen Zustandsparameters, vorzugsweise nur in Abhängigkeit zumindest eines kinematischen Zustandsparameters wie hierin offenbart.

Das Steuern und/oder Regeln der Betätigung der Betätigungselemente 311, 321 wird vorzugsweise durch die Automatisierungseinrichtung 500 realisiert, welche als Steuerungs- und/oder Regelungseinrichtung, ausgebildet sein kann.

In Abschnitt S30 erfolgt ein Einstellen des definierten Betriebszustands, vorzugsweise der definierten Lage, des Arbeitswerkzeugs 200 in Abhängigkeit des Betätigens oder durch das Betätigen der Verstelleinrichtungen 310, 320. Das Einstellen der definierten Lage des Arbeitswerkzeugs 200 erfolgt vorzugsweise im Wesentlichen gleichzeitig zu dem Betätigen der Verstelleinrichtungen 310, 320 aufgrund der direkten und/oder unmittelbaren mechanischen Koppelung der Verstelleinrichtungen 310, 320 mit dem Arbeitswerkzeug 200.

Das Verfahren gemäß der vorliegenden Erfindung zeichnet sich durch ein Betätigen, das heißt durch ein Regeln und/oder durch ein Steuern der Betätigungselemente 311, 321 und somit ihrer Betätigung aus, welches vorzugsweise zunächst ausschließlich auf Basis kinematischer Zustandsparameter und/oder in Abhängigkeit eines kinematischen Betätigungszustands erfolgt. Belastungen in Form von Drücken, Druckverläufen, Kräften oder Kraftverläufen an den Verstelleinrichtungen 310, 320 und/oder an dem Arbeitswerkzeug 200 werden vorzugsweise zunächst nicht berücksichtigt.

In Abschnitt S40 kann ein Aufrechthalten des eingestellten definierten Betriebszustands, vorzugsweise der eingestellten definierten Lage, des Arbeitswerkzeugs 200 unabhängig von einer auftretenden und/oder erfassten Belastung an dem Arbeitswerkzeug 200 und/oder an den Verstelleinrichtungen 310, 320 erfolgen. Es ist allerdings möglich, dass ein Aufrechthalten des eingestellten definierten Betriebszustands, vorzugsweise der eingestellten definierten Lage, des Arbeitswerkzeugs 200 bis zum Erreichen und/oder bis zum Erfüllen und/oder bis zum Ändern zumindest eines Betriebsparameters erfolgt, wobei der zumindest eine Betriebsparameter zumindest einen von folgenden umfasst: eine definierte Arbeitszeitdauer des Arbeitswerkzeugs 200 in dem definierten Betriebszustand; eine erfasste definierte Eigenschaft des Bodens B; eine erfasste definierte Belastung an dem Arbeitswerkzeug 200 und/oder an den Verstelleinrichtungen 310, 320; und/oder eine erfasste definierte Lage des Maschinenrahmens 100 und/oder des Arbeitswerkzeugs 200.

Demnach kann beispielsweise die eingestellte definierte Lage des Arbeitswerkzeugs 200 über eine definierte Zeitdauer aufrechterhalten werden und anschließend geändert werden. Ferner kann zusätzlich oder alternativ in Abhängigkeit eines erfassten Zustands des Bodens B (beispielsweise eine gemessene Feuchtigkeit, etc.) ein Aufrechterhalten der definierten Lage des Arbeitswerkzeugs 200 erfolgen bis eine Änderung des Zustands, das heißt der Eigenschaft des Bodens B erfasst wird.

Mit anderen Worten erfolgt eine Steuerung und/oder Regelung des definierten Betriebszustands, vorzugsweise einer definierten Lage, des Arbeitswerkzeugs 200, beispielsweise einer definierten Arbeitstiefe T von Schareinrichtungen 210, 220, nicht anhand einer Veränderung von Belastungen, beispielsweise in Form von Kräften und/oder Drücken, sondern durch kinematische Eigenschaften und/oder Parameter. Beispielsweise können mit dem vorliegenden Verfahren gezielte und somit definierte Längenänderungen der Betätigungselemente 311, 321 durchgeführt werden. Zur Einstellung der Lage des Arbeitswerkzeugs 200 werden demnach vorzugsweise nur kinematische Parameter und Eigenschaften herangezogen. Dadurch kann beispielsweise eine exaktere Einstellung und Aufrechthaltung der definierten Lage des Arbeitswerkzeugs 200 realisiert werden.

Mit Steuern der Betätigungselemente 311, 321 erfolgt vorzugsweise ein Betätigen der Betätigungselemente 311, 321 in Abhängigkeit des erfassten kinematischen Betätigungszustands, das heißt zumindest eines erfassten kinematischen Zustandsparameters, wobei während des Betätigens und/oder nach dem Betätigen kein Erfassen des (veränderten) kinematischen Betätigungszustands erfolgt.

Mit Regeln der Betätigungselemente 311, 321 erfolgt vorzugsweise ein Betätigen der Betätigungselemente 311, 321 in Abhängigkeit des erfassten kinematischen Betätigungszustands, das heißt zumindest eines erfassten kinematischen Zustandsparameters, wobei zumindest während des Betätigens und/oder zumindest nach dem Betätigen ein (weiteres oder erneutes) Erfassen des (veränderten) kinematischen Betätigungszustands und/oder des definierten Betriebszustands, vorzugsweise der definierten Lage, des Arbeitswerkzeugs 200 erfolgt, beispielsweise durch zumindest ein Sensorelement 214, 314, 315, 324, 325, was wiederum im Zuge eines weiteren oder erneuten Betätigens berücksichtigt wird.

Es ist möglich, dass in dem Abschnitt S10 das Erfassen des kinematischen Betätigungszustands der Verstelleinrichtungen 310, 320 in Abhängigkeit einer definierten Frequenz erfolgt. Zusätzlich ist es möglich, dass in dem Abschnitt S20 das Betätigen der Verstelleinrichtungen 210, 220 in Abhängigkeit einer definierten Frequenz erfolgt. Die definierte Frequenz kann vorzugsweise eine einstellbare und/oder definierbare Frequenz sein, sodass ein Erfassen und ein Betätigen beispielsweise nach jeweils 50 Millisekunden oder nach jeweils 100 Millisekunden erfolgt.

Ebenfalls kann in Abschnitt S10 zusätzlich ein Erfassen einer ersten Lage des Arbeitswerkzeugs 200 in Abhängigkeit einer definierten Frequenz erfolgen.

Es ist möglich, dass Erfassen des kinematischen Betätigungszustands der Verstelleinrichtungen 310, 320 in Abhängigkeit einer definierten Frequenz und Betätigen der Verstelleinrichtungen 210, 220 in Abhängigkeit der definierten Frequenz im Wesentlichen gleichzeitig oder im Wesentlichen alternierend und somit abwechselnd erfolgt.

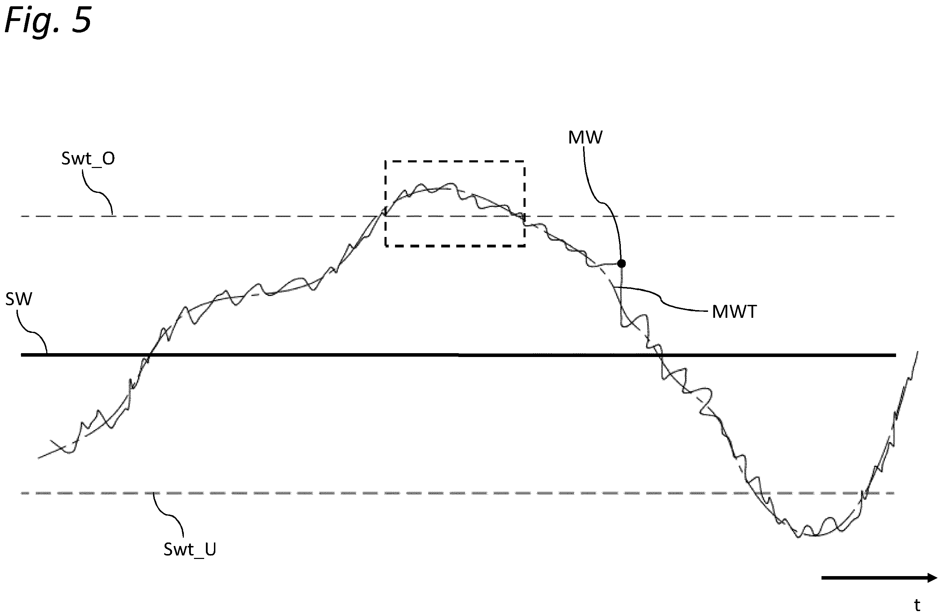

Zusätzlich kann vorgesehen sein, dass in einem Abschnitt S10 ein Erfassen einer Belastung an dem zumindest einen Arbeitswerkzeug 200 erfolgt, vorzugsweise in Abhängigkeit einer definierten Frequenz. Beispielsweise kann ein Messen einer auf zumindest einer Schareinrichtung 210, 220 des Arbeitswerkzeugs 200 wirkenden Kraft mit einer Frequenz von 50 Hertz erfolgen und sodann in Abschnitt S20 ein jeweiliges Betätigen der Verstelleinrichtungen 310, 320 erfolgen, wenn die erfasste Belastung eine definierte Belastung erreicht, um die erfasste Belastung im Wesentlichen konstant oder innerhalb definierter Schwellwertparameter Swt_O, Swt_U um einen Sollwert SW aufrechtzuhalten (siehe hierzu auch Figur 5). Der Sollwert SW kann ein definierter, vorzugsweise eingestellter, Wert sein.

Die erfasste Belastung in Form von Messwerten MW einer Kraft (resultierend aus Messsignalen entsprechender Sensorelemente) über eine definierte Zeitdauer kann durch Bildung von Mittelwerten MWT als Kurvenverlauf graphisch dargestellt und berücksichtigt werden. Bei einem Übersteigen der erfassten Belastung und somit des jeweiligen oberen Schwellwertparameters Swt_O kann eine entsprechende Steuerung und/oder Regelung der Betätigungselemente 311, 321 erfolgen, welche vorzugsweise ein Verstellen, das heißt ein teilweises Anheben der Arbeitsmaschine 200 zur Folge hat.

Figur 5 zeigt den Verlauf einer erfassten Belastung an dem Arbeitswerkzeug 200 in Form von Messwerten MW einer gemessenen Kraft zu jeweiligen Zeitpunkten t, wobei ein Messwert MW gekennzeichnet ist. Ferner sind ein definierter Sollwert SW sowie ein oberer Schwellwertparameter Swt_O und ein unterer Schwellwertparameter Swt_U dargestellt. Die Kurve der Mittelwerte MWT resultiert aus der Mittelwertbildung der Messwerte, vorzugsweise jeweils zeitlich zueinander benachbart erfasster Messwerte.

In dem mit einem strichlierten Quader gekennzeichneten Bereich übersteigt die erfasste Belastung den oberen Schwellwertparameter Swt_O, sodass in diesem Zustand eine entsprechende Steuerung und/oder Regelung der Betätigung der Betätigungselemente 311, 321 erfolgt, um die erfasste Belastung und somit die an dem Arbeitswerkzeug 200 tatsächlich anliegende Belastung entsprechend zu verringern.

Um ein Überschwingverhalten der Steuerung und/oder der Regelung der Betätigungselemente 311, 321 zu vermeiden oder zumindest zu reduzieren, kann vorgesehen sein, bei Überschreiten des oberen Schwellwertparameters Swt_O eine Steuerung und/oder Regelung der Betätigung der Betätigungselemente 311, 321 in abgestufter und somit intervallförmiger Weise durchzuführen, sodass beispielweise Längenänderungen der Betätigungselemente 311, 321 schrittweise infolge Betätigung von beispielsweise jeweils 0,5 Zentimeter oder jeweils 1,0 Zentimeter erfolgen.

Das Verfahren gemäß der vorliegenden Erfindung zeichnet sich beispielsweise auch dadurch aus, dass die Betätigung der Betätigungselemente 311, 321 jeweils in vergleichsweise geringen Dimensionen erfolgt, nachdem die Einstellung der Lage des Arbeitswerkzeugs 200 aufgrund der Konfiguration insgesamt einer gewissen Trägheit unterliegt. Dadurch kann beispielsweise die Gefahr des Überschwingens weiter reduziert werden.

Das Verfahren gemäß der vorliegenden Erfindung kann vorzugsweise zumindest teilweise als computerimplementiertes Verfahren ausgebildet sein und in einer Laufzeitumgebung einer signalverarbeitenden elektronischen Recheneinheit ausgeführt werden. Es ist möglich, dass bestimmte Abschnitte des Verfahrens, wie bereits oben erwähnt, zumindest teilweise parallel und/oder gleichzeitig ablaufen oder ausgeführt werden können.

Die vorliegende Erfindung ist nicht auf die vorstehend beschriebenen Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Vorzugsweise beansprucht die vorliegende Erfindung auch Schutz für den Gegenstand und die Merkmale der Unteransprüche unabhängig von den in Bezug genommenen Ansprüchen.

### Bezugszeichenliste

- 1: Landwirtschaftliche Arbeitsmaschine
- 100: Maschinenrahmen
- 110: Tragstruktur
- 120: Schenkel
- 130: Tragelement
- 200: Arbeitswerkzeug
- 210: Werkzeugeinrichtung
- 211: Schneidscheibeneinheit
- 212: Nachlaufrolleneinheit
- 213: Lenker
- 214: Sensorelement
- 220: Werkzeugeinrichtung
- 221: Schneidscheibeneinheit
- 222: Nachlaufrolleneinheit
- 223: Lenker
- 310: Verstelleinrichtung
- 311: Betätigungselement
- 312: Abstützelement
- 313: Stellelement
- 314: Sensorelement
- 315: Sensorelement
- 320: Verstelleinrichtung
- 321: Betätigungselement
- 322: Abstützelement
- 323: Stellelement
- 324: Sensorelement
- 325: Sensorelement
- 400: Abstützeinrichtung
- 500: Automatisierungseinrichtung
- B: Boden
- BR: Bewegungsrichtung
- MW: Messwert
- MWT: Mittelwertkurve
- S: Signal
- SW: Sollwert
- Swt_U: Schwellwertparameter
- Swt_O: Schwellwertparameter
- T: Arbeitstiefe
- t: Zeit
- X: Seitenansicht
- Z: Ausschnitt

## Patentansprüche

1. Verfahren zur Einstellung eines definierten Betriebszustands, vorzugsweise einer definierten Lage, zumindest eines Arbeitswerkzeugs (200) einer landwirtschaftlichen Arbeitsmaschine (1) zur Bearbeitung eines Bodens (B) und/oder zur Einbringung eines landwirtschaftlichen Guts in einen Boden (B),
wobei das zumindest eine Arbeitswerkzeug (200) mittels zumindest einer Verstelleinrichtung (310, 320) an einen Maschinenrahmen (100) der Arbeitsmaschine (1) verstellbar gekoppelt ist,
umfassend:
• Erfassen eines kinematischen Betätigungszustands der zumindest einen Verstelleinrichtung (310, 320), welcher vorzugsweise in einem Betriebszustand der Arbeitsmaschine (1) einer ersten Lage des zumindest einen Arbeitswerkzeugs (200) in Bezug auf den Boden (B) zugeordnet ist;
• Betätigen, vorzugsweise Steuern und/oder Regeln, der zumindest einen Verstelleinrichtung (310, 320) in Abhängigkeit des erfassten kinematischen Betätigungszustands bis ein definierter kinematischer Betätigungszustand der zumindest einen Verstelleinrichtung (310, 320) erreicht wird; und
• Einstellen des definierten Betriebszustands, vorzugsweise der definierten Lage, des zumindest einen Arbeitswerkzeugs (200) in Abhängigkeit des Betätigens der zumindest einen Verstelleinrichtung (310, 320).

2. Verfahren nach Anspruch 1,
umfassend:
• Aufrechthalten des eingestellten definierten Betriebszustands, vorzugsweise der eingestellten definierten Lage, des zumindest einen Arbeitswerkzeugs (200) unabhängig von einer auftretenden und/oder erfassten Belastung an dem zumindest einen Arbeitswerkzeug (200) und/oder an der zumindest einen Verstelleinrichtung (310, 320); und/oder
• Aufrechthalten des eingestellten definierten Betriebszustands, vorzugsweise der eingestellten definierten Lage, des zumindest einen Arbeitswerkzeugs (200) bis zum Erreichen, Ändern und/oder Erfüllen zumindest eines Betriebsparameters, wobei der zumindest eine Betriebsparameter zumindest einen von folgenden umfasst:
• eine definierte Arbeitszeitdauer des zumindest einen Arbeitswerkzeugs (200) in dem definierten Betriebszustand;
• eine erfasste definierte Eigenschaft des Bodens (B);
• eine erfasste definierte Belastung an dem zumindest einen Arbeitswerkzeug (200) und/oder an der zumindest einen Verstelleinrichtung (310, 320); und/oder
• eine erfasste definierte Lage des Maschinenrahmens (100) und/oder des zumindest einen Arbeitswerkzeugs (200).

3. Verfahren nach Anspruch 1 oder 2,
umfassend:
• Erfassen des kinematischen Betätigungszustands der zumindest einen Verstelleinrichtung (310, 320) in Abhängigkeit einer definierten Frequenz; und/oder
• Betätigen der zumindest einen Verstelleinrichtung (310, 320) in Abhängigkeit einer definierten Frequenz;
wobei vorzugsweise Erfassen des kinematischen Betätigungszustands der zumindest einen Verstelleinrichtung (310, 320) und Betätigen der zumindest einen Verstelleinrichtung (310, 320) gleichzeitig oder alternierend erfolgen.

4. Verfahren nach einem der vorhergehenden Ansprüche,
wobei Erfassen des kinematischen Betätigungszustands der zumindest einen Verstelleinrichtung (310, 320) umfasst:
• Messen und/oder Abrufen und/oder Berechnen zumindest eines kinematischen Zustandsparameters, durch welchen die zumindest eine Verstelleinrichtung (310, 320) oder zumindest ein Teil der zumindest einen Verstelleinrichtung (310, 320) in Bezug auf eine Lage und/oder in Bezug auf eine Form gekennzeichnet ist.

5. Verfahren nach einem der vorhergehenden Ansprüche,
umfassend:
• Erfassen einer ersten Lage des zumindest einen Arbeitswerkzeugs (200) in Bezug auf den Boden (B), vorzugsweise vor einem Betätigen der zumindest einen Verstelleinrichtung (310, 320) und/oder in Abhängigkeit einer definierten Frequenz;
• Verifizieren der erfassten ersten Lage des zumindest einen Arbeitswerkzeugs (200) mit dem erfassten kinematischen Betätigungszustand der zumindest einen Verstelleinrichtung (310, 320) anhand zumindest eines Verifikationsparameters;
• Betätigen der zumindest einen Verstelleinrichtung (310, 320) in Abhängigkeit der erfassten ersten Lage, vorzugsweise verifizierten erfassten ersten Lage, des zumindest einen Arbeitswerkzeugs (200).

6. Verfahren nach einem der vorhergehenden Ansprüche,
umfassend:
• Erfassen des definierten Betriebszustands, vorzugsweise der definierten Lage, des zumindest einen Arbeitswerkzeugs (200), vorzugsweise nach einem Betätigen der zumindest einen Verstelleinrichtung (310, 320) und/oder in Abhängigkeit einer definierten Frequenz; und/oder
• Verifizieren des erfassten definierten Betriebszustands, vorzugsweise der erfassten definierten Lage, des zumindest einen Arbeitswerkzeugs (200) mit dem betätigten kinematischen Betätigungszustand der zumindest einen Verstelleinrichtung (310, 320) anhand zumindest eines Verifikationsparameters;
• Aufrechthalten des erfassten definierten Betriebszustands, vorzugsweise der erfassten definierten Lage, des zumindest einen Arbeitswerkzeugs (200) in Abhängigkeit des verifizierten erfassten definierten Betriebszustands, vorzugsweise der verifizierten erfassten definierten Lage, des zumindest einen Arbeitswerkzeugs (200).

7. Verfahren nach einem der vorhergehenden Ansprüche,
wobei Betätigen der zumindest einen Verstelleinrichtung (310, 320) umfasst:
• Steuern und/oder Regeln zumindest eines Betätigungselements (311, 321) der zumindest einen Verstelleinrichtung (310, 320) in Abhängigkeit zumindest eines kinematischen Zustandsparameters,
wobei das zumindest eine Betätigungselement (311, 321) zur Verstellung des kinematischen Betätigungszustands der zumindest einen Verstelleinrichtung (310, 320) oder zumindest eines Teils der zumindest einen Verstelleinrichtung (310, 320), vorzugsweise einer Lage und/oder einer Form der zumindest einen Verstelleinrichtung (310, 320), infolge Betätigung konfiguriert ist,
wobei der zumindest eine kinematische Zustandsparameter zumindest einen von folgenden umfasst, welcher der zumindest einen Verstelleinrichtung (310, 320) und/oder dem zumindest einen Arbeitswerkzeug (200) und/oder dem Maschinenrahmen (100) zugeordnet ist:
• eine Länge und/oder eine Längenänderung;
• einen Weg und/oder eine Wegänderung;
• einen Abstand und/oder eine Abstandänderung;
• einen Winkel und/oder eine Winkeländerung;
• eine Geschwindigkeit und/oder eine Geschwindigkeitsänderung;
• eine Beschleunigung und/oder eine Beschleunigungsänderung; und/oder
• ein Lagerungskennfeld zumindest eines Lagerelements des zumindest einen Arbeitswerkzeugs (200) an der zumindest einen Verstelleinrichtung (310, 320) und/oder an dem Maschinenrahmen (100), vorzugsweise unter Berücksichtigung einer Vorspannbelastung des zumindest einen Lagerelements.

8. Verfahren nach einem der vorhergehenden Ansprüche,
wobei die zumindest eine Verstelleinrichtung (310, 320), vorzugsweise zumindest ein Betätigungselement (311, 321) der zumindest einen Verstelleinrichtung (310, 320), definiert mechanisch, elektrisch, elektromechanisch, hydraulisch und/oder pneumatisch betätigt wird.

9. Verfahren nach einem der vorhergehenden Ansprüche,
umfassend:
• Erfassen einer Belastung an dem zumindest einen Arbeitswerkzeug (200), vorzugsweise in Abhängigkeit einer definierten Frequenz; und
• Betätigen der zumindest einen Verstelleinrichtung (310, 320), vorzugsweise abgestuftes Betätigen der zumindest einen Verstelleinrichtung (310, 320), wenn die erfasste Belastung an dem zumindest einen Arbeitswerkzeug (200) eine definierte Belastung erreicht und/oder übersteigt, um vorzugsweise die erfasste Belastung an dem zumindest einen Arbeitswerkzeug (200) konstant oder innerhalb definierter Schwellwertparameter und/oder innerhalb eines definierten Schwellwertparameterbereichs aufrechtzuhalten und/oder einzustellen.

10. Verfahren nach einem der vorhergehenden Ansprüche,
• Abfragen und Auswählen zumindest eines Kennwertparameters aus einem Speicherelement in Abhängigkeit des erfassten kinematischen Betätigungszustands der zumindest einen Verstelleinrichtung (310, 320) und/oder einer erfassten ersten Lage des zumindest einen Arbeitswerkzeugs (200);
• Betätigen der zumindest einen Verstelleinrichtung (310, 320), vorzugsweise Steuern und/oder Regeln des zumindest eines Betätigungselements (311, 321) der zumindest einen Verstelleinrichtung (310, 320), in Abhängigkeit des ausgewählten zumindest einen Kennwertparameters,
wobei vorzugsweise der zumindest eine Kennwertparameter einem Stellkennfeld der zumindest einen Verstelleinrichtung (310, 320), vorzugsweise des zumindest einen Betätigungselements (311, 321), zugeordnet ist und/oder zumindest ein solches umfasst.

11. Verfahren nach einem der vorhergehenden Ansprüche,
wobei Erfassen des kinematischen Betätigungszustands der zumindest einen Verstelleinrichtung (310, 320) umfasst:
• Erfassen zumindest eines kinematischen Zustandsparameters durch zumindest ein Sensorelement (214, 314, 315, 324, 325), welches der zumindest einen Verstelleinrichtung (310, 320), vorzugsweise zumindest einem Betätigungselement (311, 312) der zumindest einen Verstelleinrichtung (310, 320), und/oder dem zumindest einen Arbeitswerkzeug (200) und/oder dem Maschinenrahmen (200) zugeordnet ist; und vorzugsweise
• Berechnen des kinematischen Betätigungszustands der zumindest einen Verstelleinrichtung (310, 320) durch Bilden von jeweils zumindest einem Mittelwert aus dem erfassten zumindest einen kinematischen Zustandsparameter und einem weiteren erfassten zumindest einen kinematischen Zustandsparameter.

12. Landwirtschaftliche Arbeitsmaschine (1) zur Bearbeitung eines Bodens (B) und/oder zur Einbringung eines landwirtschaftlichen Guts in einen Boden (B) mittels zumindest eines Arbeitswerkzeugs (200),
wobei das zumindest eine Arbeitswerkzeug (200) mittels zumindest einer Verstelleinrichtung (310, 320) an einen Maschinenrahmen (100) der Arbeitsmaschine (1) verstellbar gekoppelt ist,
umfassend:
• zumindest ein Sensorelement (214, 314, 315, 324, 325) zur Erfassung eines kinematischen Betätigungszustands der zumindest einen Verstelleinrichtung (310, 320), welcher vorzugsweise in einem Betriebszustand der Arbeitsmaschine (1) einer ersten Lage des zumindest einen Arbeitswerkzeugs (200) in Bezug auf den Boden (B) zugeordnet ist;
• eine Automatisierungseinrichtung (500), vorzugsweise eine Steuerungs- und/oder Regelungseinrichtung (500), zur Steuerung und/oder Regelung der zumindest einen Verstelleinrichtung (310, 320), vorzugsweise zumindest eines Betätigungselements (311, 321) der zumindest einen Verstelleinrichtung (310, 320), in Abhängigkeit des erfassten kinematischen Betätigungszustands bis ein definierter kinematischer Betätigungszustand der zumindest einen Verstelleinrichtung (310, 320) erreicht wird, um einen definierten Betriebszustand, vorzugsweise eine definierte Lage, des zumindest einen Arbeitswerkzeugs (200) in Abhängigkeit des Betätigens der zumindest einen Verstelleinrichtung (310, 320) einzustellen.

13. Arbeitsmaschine (1) nach Anspruch 12,
wobei die zumindest eine Verstelleinrichtung (310, 320), vorzugsweise zumindest ein Betätigungselement (311, 321) der zumindest einen Verstelleinrichtung (310, 320), als zumindest eine von folgenden ausgebildet ist und/oder zumindest eine von folgenden umfasst:
• einen Linearaktuator, vorzugsweise einen doppeltwirkenden Zylinder oder einen Spindeltrieb;
• einen Schwenkaktuator; und/oder
• ein Gestänge, vorzugsweise umfassend zumindest ein Abstützelement (312, 322) und/oder zumindest ein Stellelement (313, 323); und/oder
wobei die zumindest eine Verstelleinrichtung (310, 320), vorzugsweise zumindest ein Betätigungselement (311, 321) der zumindest einen Verstelleinrichtung (310, 320), mechanisch, elektrisch, elektromechanisch, hydraulisch und/oder pneumatisch betätigbar ausgebildet ist.

14. Arbeitsmaschine (1) nach Anspruch 12 oder 13,
wobei das zumindest eine Sensorelement (214, 314, 315, 324, 325) als zumindest eines von folgenden ausgebildet ist und/oder zumindest eines von folgenden umfasst:
einen Abstands-/Wegsensor, einen Lagesensor, einen Beschleunigungssensor, einen Drehratensensor, einen GPS-Sensor, einen optischen Sensor und/oder einen Ultraschallsensor und/oder einen Kraftsensor und/oder einen Drucksensor.

15. Arbeitsmaschine (1) nach einem der vorhergehenden Ansprüche 12 bis 14,
wobei die Arbeitsmaschine (1), vorzugsweise die Automatisierungseinrichtung (500), zumindest ein Speicherelement mit zumindest einem Kennwertparameter umfasst, wobei der zumindest eine Kennwertparameter zur Betätigung der zumindest einen Verstelleinrichtung (310, 320), vorzugsweise zur Steuerung und/oder Regelung des zumindest eines Betätigungselements (311, 321) der zumindest einen Verstelleinrichtung (310, 320), konfiguriert ist.

16. Arbeitsmaschine (1) nach einem der vorhergehenden Ansprüche 12 bis 15,
wobei die zumindest eine Verstelleinrichtung (310, 320) als eine selbsthemmende Verstelleinrichtung (310, 320) ausgebildet und/oder konfiguriert ist, um vorzugsweise vor und/oder nach einer Betätigung eine Änderung zumindest des definierten kinematischen Betätigungszustands oder zumindest eines Teils davon infolge einer Belastung zu verhindern oder zumindest teilweise definiert zu beschränken.

17. Arbeitsmaschine (1) nach einem der vorhergehenden Ansprüche 12 bis 16,
wobei die landwirtschaftliche Arbeitsmaschine (1) zur Ausführung eines Verfahrens gemäß einem der vorhergehenden Ansprüche 1 bis 11 konfiguriert ist.
